# EUROPEAN PATENT SPECIFICATION

(11) **EP 4 421 250 B1**
(45) Date of publication and mention of the grant of the patent: **26.11.2025**
(21) Application number: 23158445.9
(22) Date of filing: 24.02.2023
(51) Int. Cl.: E02F 9/26, G01S 7/497, E02F 9/20

(54) **MINING VEHICLE CALIBRATION**
KALIBRIERUNG EINES BERGBAUFAHRZEUGS
ÉTALONNAGE DE VÉHICULE D'EXPLOITATION MINIÈRE

(43) Date of publication of application: 28.08.2024
(73) Proprietor: Sandvik Mining and Construction Oy, 33330 Tampere (FI)
(72) Inventor: Snellman, Olli, 33330 Tampere (FI); Svensberg, Ville, 33330 Tampere (FI)
(74) Representative: Sandvik

(56) References cited:
- US-A1- 2013 173 109
- US-A1- 2017 089 041

## Description

### FIELD

The present invention relates to calibration of mining vehicles, and further to verifying a calibration related action for a mining vehicle.

### BACKGROUND

Mining or construction excavation worksites, such as underground hard rock or soft rock mines, may comprise areas for automated operation of mining vehicles, such as load and/or haul machines and drilling rigs. Such mining vehicles may be an unmanned vehicle, for example remotely monitored and/or controlled from a control room, or a manned vehicle, such as a vehicle operated by an operator in a cabin of the vehicle. Mining vehicles may be configured to perform at least some tasks autonomously. For example, an automated mining loader may be configured to perform an autonomous load and haul procedure comprising loading a bucket, driving from a loading site to an unloading site, unloading the bucket, and returning from the unloading site to the loading site.

A worksite and the autonomously operating vehicles at the worksite may comprise a large number of mobile and fixed sensors continuously collecting data related to or affecting operations in the mine operations. Such data may be referred to as mining operations data and may comprise, for example, vehicle operations status data, such as speed, position at worksite, motor parameter, load, etc., and/or environment data, such as temperature, air condition etc. The data may be transferred to a data processing system, which may be configured to provide a mine operations control system, comprising a user interface for a user of the system, which may be referred to as an operator. Positions of vehicles performing their drive orders may be indicated for the operator monitoring the vehicles and manually controlling a vehicle when needed. Worksites may be very large and complex with a fleet of simultaneously operating vehicles monitored by the operator.

Calibration actions may need to be performed for mining vehicles to ensure appropriate operation particularly in case of autonomously operating vehicles. For example, sensors and/or actuators of movable mining vehicle components may need to be periodically calibrated. Calibration of a mining vehicle often requires manual verification, which may involve ensuring that boom, bucket or box movement is possible without physical limitations. Calibration for mining vehicles is usually performed based on manual service personnel guidance or timers. A method for calibrating and recalibrating a vehicle model used to autonomously control a machine on a worksite is for example disclosed in document US 2013/173109 A1.

### SUMMARY

The invention is defined by the features of the independent claims. Some specific embodiments are defined in the dependent claims.

According to a first aspect, there is provided an apparatus for a mining vehicle comprising a body, an actuator, a work implement, and a scanner, wherein the actuator is connected to the work implement and the body and adapted to change position of the work implement in respect to the body, the apparatus comprising means for or configured to cause the apparatus at least to: receive scanning data based on environment scanning performed by the scanner, wherein the scanning data is indicative of at least one position of a work implement portion of the work implement in relation to a body portion of the body, receive calibration triggering data comprising a calibration triggering threshold indicative of at least one of a threshold difference between the body portion and the work implement portion controlled to a target position or a threshold difference from a target movement range of the work implement portion in relation to the body portion, process the scanning data and the calibration triggering data to determine at least one of:
- if a deviation between the target position and a current position of the work implement portion based on the scanning data meets the calibration triggering threshold, or
- if a deviation between the target movement range and a current range of movement of the work implement portion based on the scanning data meets the calibration triggering threshold, and
detect a need for calibrating the work implement in respect to the body portion in response to the at least one deviation meeting the calibration triggering threshold.

According to a second aspect, there is provided a method for a mining vehicle comprising a body, an actuator, a work implement, and a scanner, wherein the actuator is connected to the work implement and the body and adapted to change a position of the work implement in respect to the body, the method comprising: receiving scanning data based on environment scanning performed by the scanner, wherein the scanning data is indicative of at least one position of a work implement portion of the work implement in relation to a body portion of the body, receiving calibration triggering data comprising a calibration triggering threshold indicative at least one of a threshold difference between the body portion and the work implement portion controlled to a target position or a threshold difference from a target movement range of the work implement portion in relation to the body portion, processing the scanning data and the calibration triggering data to determine at least one of:
- if a deviation between the target position and a current position of the work implement portion based on the scanning data meets the calibration triggering threshold, or
- if a deviation between the target movement range and a current range of movement of the work implement portion based on the scanning data meets the calibration triggering threshold, and
detecting a need for calibrating the work implement in response to the at least one deviation meeting the calibration triggering threshold.

The means of the apparatus of the first aspect may comprise at least one processor and at least one memory including computer program code, the at least one memory and the computer program code configured to, with the at least one processor, cause the apparatus to perform the method of the second aspect. The means may comprise one or more processors and memory comprising instructions, when executed by the one or more processors, cause the apparatus to perform the method. Embodiments of the method include various embodiments of the apparatus of the first aspect, some of which are illustrated in dependent apparatus claims.

According to a third aspect, there is provided an apparatus comprising at least one processor, at least one memory including computer program code, the at least one memory and the computer program code being configured to, with the at least one processor, cause the apparatus at least to perform the method or an embodiment of the method.

According to a fourth aspect, there is provided a computer program, a computer program product or (a non-tangible) computer-readable medium comprising computer program code for, when executed in a data processing apparatus, to cause the apparatus to perform the method or an embodiment thereof.

### BRIEF DESCRIPTION OF THE DRAWINGS

FIGURE 1 illustrates an example of an example of a mining vehicle;
FIGURE 2 illustrates a method in accordance with some embodiments;
FIGURE 3 illustrates functions of a control unit in accordance with some embodiments;
FIGURES 4a and 4b illustrate side views of a mining vehicle performing a calibration action; and
FIGURE 5 illustrates an example apparatus capable of supporting at least some embodiments.

### EMBODIMENTS

The presently disclosed embodiments are applicable, in particular, to various mining vehicles used in mining industry, such as underground or surface mines or construction sites. The mining vehicle may be suitable for loading, transporting and unloading excavated material or other bulk material. Particular examples of such mining vehicles include dumpers and loading equipment or loaders comprising a bucket attached to a boom. The excavated material may, for example, be rocks excavated in a surface or underground operating area. In this context, the term "rock" is to be understood broadly to cover also a boulder, rock material, crust and other relatively hard material. Some other examples of mining vehicles include drilling rigs comprising one or more booms, feed beam connected to each of the booms, and a drilling unit (comprising a drilling machine) attached to the feed beam.

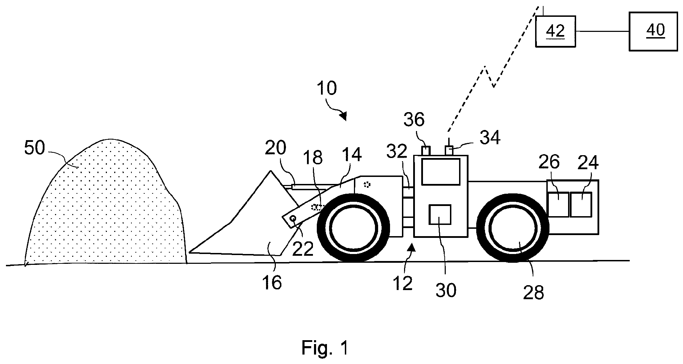

Figure 1 shows an example of a mining vehicle 10 comprising a (mobile) carrier 12, one or more booms 14 and a bucket 16 attached in a pivotable or otherwise movable manner to the one or more booms 14. For example, the bucket 16 may be coupled to two booms 14. The attachment may comprise at least one pivot 22, and the bucket 16 may be turned with respect to the pivot(s). The mining vehicle may be an articulated vehicle comprising two sections connected by a joint 32. The mining vehicle may be a load and haul (LHD) vehicle, or a vehicle mainly intended for loading.

The mining vehicle 10 further comprises a first actuator 18 for moving the boom 14 upwards and downwards, and a second actuator 20 for turning the bucket 16 in respect to the pivot 22. The actuators 18, 20 may be hydraulically and/or electrically operable actuators, or operable by some other source of energy. It should also be noted that Figure 1 is simplified and, for example, the first actuator 18 and/or the second actuator 20 may in practise comprise more than one actuator. For example, a lever arm arrangement may be applied for connecting a cylinder to the bucket 16.

The mining vehicle 10 may comprise a system of pumps 24 for generating hydraulic pressure for operating various parts of the machine, such as lifting the boom 14, turning the bucket, 16 etc. The mining vehicle 10 may comprise one or more other sources of energy, such as an accumulator, a hydrogen container, a fuel tank, etc.

The mining vehicle 10 comprises at least one motor 26, such as an electric motor or a combustion motor. Power from the motor 26 may be provided by a crank shaft (not shown) to front and/or rear wheels 28 either directly or via a gear box (not shown).

The mining vehicle 10 comprises at least one control unit 30. The control unit may comprise one or more processors and memory, configured to control at least some functions and/or actuators of the mining vehicle. In some embodiments, the control unit 30 is configured to control at least calibration control related operations, and there may be one or more other control units in the mining vehicle for controlling other operations. It is to be appreciated that the control unit 30 may be configured to perform at least some of the below illustrated features, or a plurality of control units or controllers may be applied to perform these features. There may be further operations modules or functions performed by the control unit(s), for example, an automatic bucket loading module, at least one positioning module, autonomous driving control module, and/or an obstacle detection module.

The mining vehicle 10 may be an automated mining vehicle, which in its autonomous operating mode may operate/drive independently without requiring continuous user control. However, the mining vehicle may be taken under external control during states of emergencies, for example.

The mining vehicle 10 may comprise at least one wireless data transfer unit 34, which may be connected to the control unit 30. The control unit 30 may be configured to control the data transfer unit 34 to establish a data transmission connection to another (second) control system 40 external to the mining vehicle 10, via an underlying wireless connection provided by a base station or access node 42. The data transfer unit 34 may thus be connected to a communications system of the worksite, such as a wireless access system comprising a wireless local area network (WLAN) and/or a cellular communications network. For example, the data transfer unit 34 may be configured to communicate with a 4G, 5G, 6G or another generation cellular network.

The control system 40 may comprise or be connected to a further network(s) and/or data processing system(s), such a worksite management system, a cloud service, a data analytics device/system, an intermediate communications network, such as the internet, etc. The system may comprise or be connected to further device(s) or control unit(s), such as a handheld user unit, a vehicle unit, a worksite management device/system, a remote control and/or monitoring device/system, data analytics device/system, sensor system/device, etc.

A control device, such as a server, of the system 40 may be configured to manage at least some operations at the worksite. The control device may be configured to provide a user interface for an operator to remotely monitor and, when needed, control automatic operation of the mining vehicles and/or assign work orders for a fleet of vehicles. For example, the control device may be configured to instruct a mining vehicle to repeatedly perform an autonomous loading and hauling cycle, and update and/or monitor such work order performance and status. Thus, the mining vehicle 10 may be unmanned, and the user interface may be remote from the mining vehicle. The mining vehicle may be remotely monitored or controlled by an operator in proximity to the mining vehicle, or in control room at the worksite or even long distance away from the worksite via communications network(s).

The mining vehicle 10 may comprise a positioning system or unit. At surface-operated mining vehicles, it may be possible to use satellite-based navigation, such as the GPS system, for determining the location and orientation of the mining vehicle with sufficient accuracy. With underground-operating mining vehicles, instead of satellite based positioning information, positioning based on dead-reckoning and/or scanning tunnel surfaces may be used.

The mining vehicle 10 may comprise one or more scanning units, or scanners 36, configured to perform scanning of the environment of the mining vehicle. The scanner may be an imaging unit, a radar, a sonar unit, or a light detecting and ranging (LIDAR) unit, a microwave or magnetic field based scanning unit, or another type of environment scanning unit. In an embodiment, the scanner 36 may be a 2D or 3D scanner, such as a LIDAR device, configured to monitor tunnel walls. The control unit 30 may be configured to compare scanned tunnel profile data to reference profile data stored in an environment model and position the mining vehicle on the basis of finding a match in the environment model. The control unit 30 may be configured to correct positioning by dead-reckoning based on scanning based positioning. In some embodiments, the scanning results are applied to detect position and orientation of the mining vehicle and one or more further elements thereof, such as a position of the scanner 36 or a leading edge or another portion of the bucket 16.

Apparatuses of the worksite, such as the control device(s) of the control system 40 and the mining vehicles 10, may be configured to store and use at least one worksite model representing current state and/or target state of the worksite environment. The worksite model may be an environment model or map. The worksite model may be a 2D model or 3D model, for example. In the case of an underground worksite, the worksite model may be indicative of tunnel profiles and may be referred to as a tunnel model. In some embodiments, the control system is configured to store a 3D (tunnel) model of the worksite, illustrating floors, walls, and ceilings of a tunnel network.

In some embodiments, the scanner is a 3D scanner, in which case 3D scanning data, for example point cloud data, is produced. The scanner may be a laser scanner or another type of sensor device, such as 4D or another type of radar, appropriate for determining obstacles and distances to obstacles for the vehicle.

In some embodiments, the worksite model comprises point cloud data generated on the basis of scanning the worksite. A point cloud is a collection of data points defined by a given coordinates system. In a 3D coordinates system, for example, a point cloud may define the profile of the underground tunnel network. The 3D model may comprise or be formed based on point cloud data generated on the basis of scanning the tunnel system.

The control device may be configured to generate and/or update the worksite model, in some embodiments based on point cloud data received from mining vehicles or other apparatuses comprising an environment scanning device. For navigation purposes, it is possible to generate a 3D model by combining depth measurements from a high-density scanner, such as a LIDAR unit. The 3D model may be stored in a database accessible by one or more modules of a computing apparatus, such as a tunnel model processing module, a user interface or visualizer module, a route planning module, and/or a positioning service module. The vehicle may comprise a simultaneous localization and mapping (SLAM) unit configured to both position the vehicle and (augment) map the environment on the basis of (2D or 3D) scanning information while the vehicle is driving.

A mining vehicle, such as the vehicle 10, may be provided with an obstacle detection function or unit, which may be part of a collision avoidance or prevention system. The obstacle detection function may be configured to perform collision examination based on scanning data received from at least scanner 36 configured to perform scanning of the environment of the vehicle. For example, one scanner may cover a rear portion of the vehicle and another scanner may cover a front section of the vehicle by directional beams. The obstacle detection may apply one or more obstacle detection or safety areas around the vehicle. If an object is detected as an obstacle in the area, the vehicle may be stopped.

In some embodiments, the mining vehicle 10 is configured to, on the basis of scanning data from at least one scanner 36, detect position and orientation of the vehicle and one or more further elements thereof, such as the scanner or a bucket. A control unit in the vehicle, such as the control unit 30, may be configured to compare operational scanned tunnel profile data to reference profile data stored in the tunnel model. The control unit may be configured to position the vehicle on the basis of finding a match in the environment model. Position and direction of an interest point of the vehicle, such as the (leading edge of the) tool, may be determined in the machine coordinate system, and further in the mine coordinate system on the basis of the detected matching between the operational point cloud data and the reference cloud data.

A driving plan, or a route plan, may define a route to be driven by the mining vehicle 10 and may be used as an input for automatic control of the mining vehicle. The plan may define a start point, an end point, and a set of route points for the automatic drive. In the case of a vehicle as illustrated in Figure 1, the driving plan may comprise information of a loading area or point and may comprise data for controlling loading of the bucket 16. Automated loading may be initiated in response to the mining vehicle entering a position or route point of a loading area in the driving plane. During automated bucket loading procedure, the mining vehicle 10 be configured to perform autonomously a sequence of appropriate movements to fill the bucket 16 and complete the loading by positioning the bucket at a position appropriate for leaving a pile 50 and hauling the load to an unloading location. The drive to the unloading site and the unloading may also be automated.

Various elements of the mining vehicle 10 may need to be calibrated. This is particularly important for autonomously operating vehicles. For example, sensors and/or actuators 16, 18 of movable mining vehicle components may need to be repetitively calibrated to ensure appropriate operation of the vehicle, such as the vehicle 10, which may be configured to perform an autonomous loading and/or hauling procedure. The mining vehicle may be configured to perform a calibration procedure, which may comprise a set of calibration actions. For example, the mining vehicle may be configured to perform a calibration action, such as movement of the bucket to uppermost position to calibrate actuators 16, 18.

There are now provided improvements for automatically detecting a need for calibration, by utilizing environment scanning. The improvements facilitate to avoid or reduce a need for manual checks and guidance for detecting a calibration need or timer-based calibration (which may be too often or too late), enabling to increase production efficiency.

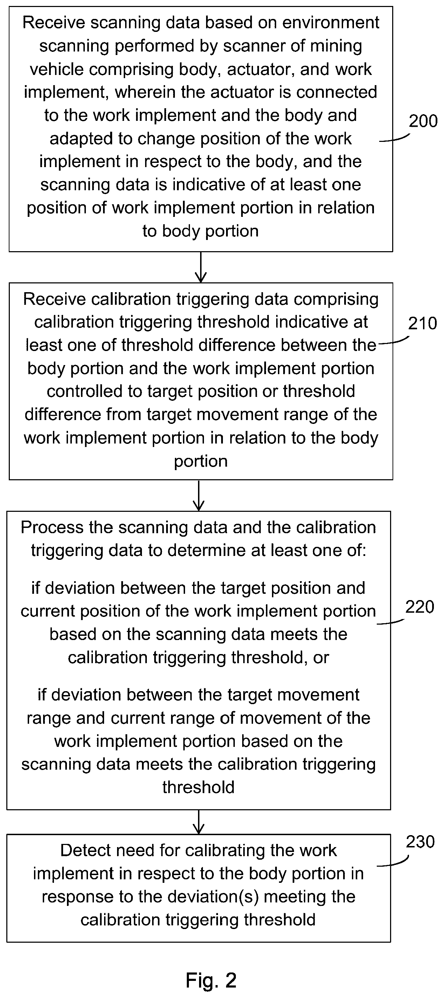

Figure 2 illustrates a method according to some embodiments. The method may be performed by an apparatus, in some embodiments a control apparatus configured to control at least calibration triggering. The method and the various embodiments thereof may be performed by a mining vehicle and a controlling apparatus thereof, such as the mining vehicle 10, and by the control unit 30 thereof, respectively. The method may be a computer-implemented method.

The method comprises receiving 200 scanning data based on environment scanning performed by a scanner of a mining vehicle comprising a body, an actuator, and a work implement. The actuator is connected to the work implement and the body and adapted to change a position of the work implement in respect to the body. The scanning data is indicative of at least one position of a work implement portion of the work implement in relation to a body portion of the body.

Block 210 comprises receiving calibration triggering data comprising at least one calibration triggering threshold. The calibration triggering threshold may be indicative of a threshold difference between the body portion and the work implement portion controlled to a target position. Such threshold difference may also be referred to as a first threshold difference or a target position threshold difference, for example. Alternatively or additionally, the calibration triggering threshold is indicative of a threshold difference from or in relation to a target movement range, the target movement range being indicative of the work implement portion in relation to the body portion. Such threshold difference may also be referred to as a second threshold difference or a range threshold difference, for example. The threshold difference may be indicative of the allowed maximum difference between the target movement range and current, actualized range of movement of the work implement portion (in relation to the body portion based on the scanning data).

The calibration triggering data may be indicative of the target position of the work implement portion in relation to the body portion. Alternatively or additionally, the calibration triggering data may be indicative of the target movement range of the work implement portion in relation to the body portion for a calibration triggering reference action.

Block 220 comprises processing the scanning data and the calibration triggering data to determine at least one of:
a. if a (first) deviation between the target position and a current position of the work implement portion based on the scanning data meets the calibration triggering threshold, or
b. if a (second) deviation between the target movement range and a current range of movement of the work implement portion based on the scanning data meets the calibration triggering threshold.

The current position and the current range of movement may be determined based on processing the scanning data, and may also be referred to as scanning-based position or scanning-based range of movement, respectively.

Block 230 comprises detecting a need for calibrating the work implement in respect to the body portion in response to at least one of the deviations of block 220 meeting the calibration triggering threshold.

Block 220 may comprise comparing the respective deviation to an associated predetermined calibration triggering threshold parameter(s) in the calibration triggering data. The threshold parameter(s) may define an allowed deviation margin or tolerance to operate without having to perform calibration. The apparatus configured to perform the method may detect the need for the calibration if the work implement deviates too much from such allowed deviation margin or tolerance defined by the calibration triggering data.

The apparatus may be configured to start a calibration procedure after block 230 to calibrate the work implement in respect to the body portion and/or cause a signal to a user interface to notify an operator of the mining vehicle of the need for the calibration. At least one calibration action may be triggered and performed in response to detecting the need in block 230. In response to block 230, the apparatus may be configured to generate and transmit a control message indicative of the need or trigger for calibrating the work implement to a control unit, such as the control unit 30. Based on the control message, the control unit may generate a UI control signal to inform an operator and/or initiate a further control action, such as start a calibration action or procedure.

Calibration may refer generally to comparison of measurement values provided by a device being tested with preconfigured reference (measurement) values, such as calibration standard values. The mining vehicle may be configured to perform a calibration procedure, which may comprise a set of calibration actions. The calibration actions may comprise, for example, controlling the work implement, such as a bucket, to a particular calibration target position, performing a measurement by a measurement device, providing measurement value(s) from the measurement device to a controller, and comparing the measurement value(s) to a prestored reference value(s) by the controller. The calibration procedure may further comprise corrective action(s) after block 230, to adjust sensor and/or actuator value(s) on the basis of the deviation(s). The calibration action may thus refer to a specific action performed by the mining vehicle or a controller thereof, such as providing a control signal for an actuator of the work implement. The control signal may be indicative of the calibration target position or comprise control data for the actuator that should enable the work implement to arrive at the calibration target position. The calibration action may comprise controlling the work implement to perform a trajectory from a start position to the calibration target position.

The apparatus may be configured to detect, on the basis of block 220, a lack of a need for calibration in response to the deviation(s) not meeting the calibration triggering threshold. This may be an additional block to the method, for example in response to the deviation(s) based on block 220 not exceeding an associated calibration triggering threshold value indicated by the calibration triggering data. Execution of block 220 may thus result in detecting that the work implement has reached (close enough) the target position and is thus within an allowed tolerance for the target position, and/or that the range of movement of the work implement is within an allowed deviation from the target movement range. If a lack of a calibration need is detected, the mining vehicle may continue its ongoing operation, such as an autonomous driving, loading, or unloading task without an interruption. Block 200 may be then be re-entered.

The method and block 200 may be entered in response to a trigger to automatically check the need for calibration. For example, such trigger may comprise detecting controlling the work implement to the target position or to perform the target movement range. The apparatus may be configured to process the scanning data and the calibration triggering data to determine the deviation in response to a control action or a signal to move the work implement portion to the target position or perform the target movement range.

The scanning data of the calibration action may refer to data generated based on environment scanning during and/or after the calibration action. The scanner is positioned and configured such that the scanning comprises an area in which the work implement portion and the body portion are visible.

The apparatus may be configured to process the scanning data in block 220 or already between block 200 and 220 to determine one or more positional differences between the work implement portion and the body portion. This may be performed to determine the current position of the work implement in relation to the body portion and/or the range of movement of the work implement in relation to the body portion. The determined positional difference(s) may be compared to one or more target positional parameters of, or based on, the calibration triggering data in block 220. The positional parameters may comprise the calibration triggering threshold, associated with the target position of the work implement portion in relation to the body portion and/or the target movement range of the work implement portion in relation to the body portion. The need for calibrating the work implement may be detected 230 on the basis of the comparison of the determined positional difference and the calibration triggering threshold.

The calibration triggering data may be indicative of at least one reference positional difference or a set of positional differences between the work implement portion and the body portion, in some embodiments at the target position of the work implement portion. Block 220 may thus comprise comparing the determined deviation(s) to reference difference(s) of the calibration triggering data.

The calibration triggering data may, depending on the applied processing embodiment and/or scanner type, comprise reference value(s) for block 220, image data indicative of the target position and/or the target range, real-time sensor value information and/or point cloud data or other type of reference environment scanning data indicative of position(s) and/or threshold(s) of the work implement in respect to the body at the target position or of the target movement range.

The calibration triggering data may comprise or be supplemented with position sensor data from a position sensor of or associated with the work implement, the position sensor data being indicative of position of the work implement in relation to the body portion. Such real-time information may be received from a memory or a bus of the mining vehicle. The apparatus may be configured to process the position sensor data and the scanning data to determine the deviation(s) in block 220. For example, boom or bucket orientation relative to a body portion based on processing the scanning data and boom or bucket orientation sensor value from a boom position sensor are compared to detect the need for calibration.

The scanning data may comprise scanned point cloud data. The apparatus may be configured to process the point cloud data, in block 220 or a further preceding step, to determine the position(s) of the work implement portion in relation to the body portion. The positional difference(s) between the work implement portion and the body portion may be compared to reference value(s) of the calibration triggering data or based on processing the calibration triggering data.

The scanning data and the calibration triggering data may comprise point cloud data. Block 220 may thus comprise:
- receiving reference point cloud data of the work implement portion and the body portion,
- processing the scanned point cloud data and the scanned reference point cloud data to perform point cloud matching operation to detect the work implement portion and the body portion in the scanned point cloud data, and
- processing the scanned point cloud data to determine the deviation of block 230, in some embodiments a distance between the detected work implement portion and the body portion in the scanned point cloud data.

**In** this embodiment, the reference point cloud data may be a pre-calibrated point cloud data set, indicative of the specific position (e.g. an extreme position) at which the work implement portion should be in relation to the body portion.

The calibration triggering data may comprise non-point cloud data. The apparatus may be configured to process the scanned point cloud data and position sensor data from a position sensor of the work implement to determine the deviation in block 220. The apparatus may be configured to process the position sensor data and the point cloud data in block 230. Thus, the calibration triggering data does not have to comprise reference point cloud data, but position or movement detected based on scanning data received from the scanner may be instantly compared to the sensor data. For example, boom position based on processing point cloud data and boom orientation sensor value from a boom position sensor are applied to detect the need for calibration. Hence, need for calibrating the work implement may be detected when the boom should be at its uppermost position based on the sensor data from the control system, but based on the processing the scanning data the apparatus detects that the boom has not reached its uppermost position.

In some embodiments, the apparatus is configured to determine the deviation(s) in block 220 based on image processing. Thus, an image based on the scanning data may be compared to a reference image of the calibration triggering data. The scanning data may comprise or be processed to generate image data. The calibration triggering data may comprise reference image data indicative of the target position of the work implement portion in relation to the body portion at the target position and/or the target movement range. Block 220 may thus comprise processing the image data of the scanning data and the reference image data to determine the at least one deviation.

The apparatus may be configured to process the image data to detect the work implement portion within an image or a set of images based on the scanning and within a reference image of the calibration triggering data. The deviation(s) are based on detected difference(s) of the work implement portion in the image based on the scanning data and in the reference image. Visual reference data may thus be stored within factory calibration, and used as the calibration triggering data.

It is to be appreciated that the reference data may comprise other than image data, such as point cloud data. The processing in block 220 may comprise comparing positional difference(s) (between the work implement portion and the body portion) based on image analysis of the scanning data to reference value(s) of the calibration triggering data or based on processing the calibration triggering data.

The scanning data may be indicative of an obstacle. The apparatus may be configured to determine, based on processing the scanning data, such as point cloud data indicative of the obstacle and the work implement, a position of the obstacle and a position of the work implement in relation to the obstacle. The apparatus may process the scanning data to determine if the work implement is or will be unable to reach the target position or perform the target movement range. This determination may thus be performed before or after block 200. In an example, the determination is performed if, on the basis of blocks 220 and 230 the need for calibration is detected, due to the deviation exceeding an associated calibration triggering threshold value. Hence, the determination may be a further check or condition in calibration need determination procedure. Based on processing the scanning data, the position of the obstacle may be compared to a current or future expected position of the work implement. The compared position of the work implement may thus be the position at which the work implement is after controlling to the target position, or a position to which the work implement is on the basis of the calibration triggering data expected to arrive after controlling to the target position.

The apparatus may be configured to, in response to detecting that the work implement is unable to reach the target position or perform the target movement range due to the obstacle, control change of the target position or the target movement range. The target position or the target movement range may be determined based on obstacle position information and vehicle dimensions data.

The apparatus may be configured to control the mining vehicle to move the work implement to the changed target position or perform the target movement range. Block 200 may be returned and the need for calibration may then be determined based on processing scanning data after moving the work implement to the changed target position or performing the changed target movement range. In another example, there may be another input causing the change of the target position or the target movement range, such as a control signal in response to detecting the work implement to hit an obstacle. In another embodiment, instead of changing the target position or the target movement range, the mining vehicle may be controlled to drive to another position at the worksite, at which there is no obstacle preventing to reach the target position or to perform the target movement range. These features enable to automatically adapt the calibration triggering procedure to physical limitations of the current operating environment.

Time required for calibration triggering can be reduced as compared to conventional manual verification. Maximum range of movement of the work implement is not required, and it is possible to reliably detect the need for calibration also in tight worksite portions, such as in low profile tunnels, at which the work implement would hit the tunnel roof at upmost position. Thus, calibration triggering can be assessed regardless of external physical limitations, and the vehicle does not need to be driven away from its production position or area.

Some further example embodiments are provided below with references to a mining vehicle, such as the vehicle 10, being configured to perform respective embodiments. However, it is to be appreciated that at least some features of the method and at least some embodiments thereof may be implemented by a control apparatus, which may be outside the mining vehicle, for example by a control device of the control system 40 controlling a set of mining vehicles. Such control apparatus may perform the method and embodiments thereof based on information received from the mining vehicle, such as the scanning data.

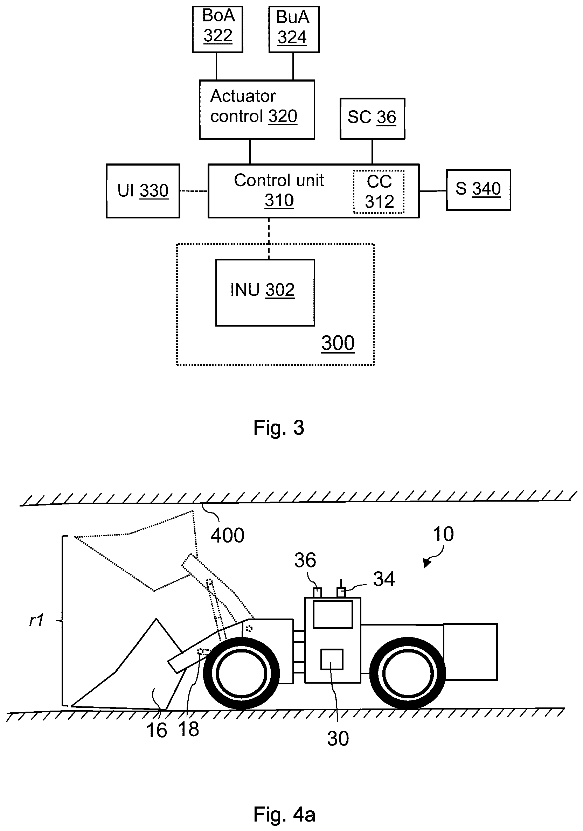

Figure 3 illustrates an arrangement and elements of a mining vehicle, such as the mining vehicle 10, configured to perform a calibration procedure, the method of Figure 2, and at least some embodiments thereof. In this example, a driveline 300 of the mining vehicle comprises an electric motor, such as the motor 26, driven by an inverter unit (INU) 302. The INU 302 comprises an inverter, which at least in some instances may also be referred to as frequency converter, alternative current (AC) drive, variable speed drive (VSD), or variable frequency drives (VFD), controlling the voltage and frequency of power supplied to an AC motor to control the torque and rotation speed of the motor.

A control system or unit 310, such as the control unit 30, may be the apparatus configured to perform at least some features of the method of Figure 2. The control unit 310 may be configured to perform a calibration control (CC) function or routine 312 performing the method and at least some embodiments of the method. The control unit 310 may comprise one or more computing units/processors executing computer program code stored in memory. The control unit may be connected to one or more other control units of a control system of the mining vehicle, in some embodiments by a controller area network (CAN) bus.

The control unit 310 may be connected to an actuator control unit or (sub)system 320, which may be connected to boom actuator (BoA) 322 and bucket actuator (BuA) 324. The control unit 310 may be configured to transmit, in or for block 200, control signals in accordance with the calibration procedure and action being performed to the actuator control system 320. The control system 320 controls the BoA 322 and BuA 324 based on the control signals to accordingly control the boom 14 and the bucket 16. It is to be noted that the boom and the bucket may have separate actuator controls, which may be directly connected to the control unit 310. An actuator control (sub)system may comprise or be connected to hydraulic circuits having lift and tilt actuator control valves for controlling the rate at which pressurized hydraulic fluid flows to respective lift and tilt hydraulic actuators in proportion to control signals.

The control unit 310 may be connected to one or more scanners 36. The control unit 310 may be configured to receive and process scanning data from the scanner(s) 36. A user interface (UI) 330 may be connected to the control unit 310, locally at the mining vehicle or via communications unit(s). The UI may comprise, for example, a joystick, a touch screen, or other input means by which an input signal from a user may be provided to the control unit for controlling the mining vehicle and autonomous operations and calibration related actions thereof.

The control unit 310 may be directly or indirectly connected to further units in the mining vehicle, such as further sensors or sensor systems 340 configured to provide inputs for the control unit 310. Examples of such sensors include boom or bucket limit sensors, boom or bucket position detection sensors, hydraulic pressure sensors, and bucket pressure measurement sensors. The control unit may be connected to elements of the driveline, such as INU 302 or another motor control unit, a motor, or a sensor in the driveline. The control unit may be connected to a communications unit and comprise or be connected to a memory, from which the calibration triggering data can be received.

The calibration triggering assessment of Figure 2 may comprise controlling the work implement portion to perform a trajectory from a start position to an end or target position. As already discussed, the calibration triggering data may define one or more threshold parameters to determine allowable deviation(s) between target position and current position of the work implement portion and/or between a target movement range and a current range of movement of the work implement.

Figure 4a illustrates an example in which the calibration action comprises the bucket 16 moving range r1 from lowermost position to uppermost position. The lowermost position may represent the start point and the uppermost position may represent the target position or target range end position, or vice versa.

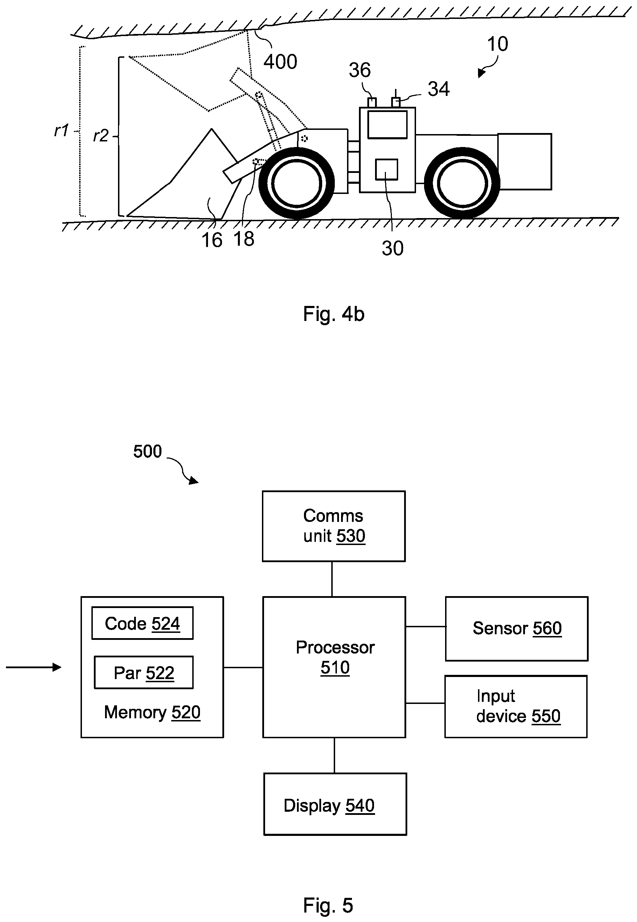

**In** the example of Figure 4a, the bucket is able to move the entire r1 required for assessing the need for triggering calibration. However, in some instances there may be obstacle(s) preventing the work implement to reach the target position or perform the target movement range. For example, in Figure 4b the tunnel roof 400 may prevent the range of movement to r2, and hence prevent reaching the uppermost position or moving the entire range r1. In the example of Figure 4b, the target position or the target movement range may be changed to avoid the bucket 16 hitting the tunnel roof 400 or from r1 to r2 or less than r2, respectively.

It is to be appreciated that various further features may be complement or differentiate at least some of the above-illustrated embodiments. For example, there may be further user interaction and/or automation functionality further assisting the operator to monitor the calibration procedure and/or control calibration verification procedure.

The mining vehicle 10 and the system of Figure 3 are disclosed herein only as examples where the embodiments disclosed herein may be implemented. The embodiments are applicable to various other types and configurations of mining vehicles and control units. Above some example embodiments are illustrated, at least some of which may be performed by the control unit 30, 310 as the performing apparatus, for example.

An electronic device comprising electronic circuitries may be an apparatus for realizing at least some embodiments illustrated above, such as the method illustrated in connection with Figure 2 and features illustrated for the control unit 30, 310. The apparatus may be comprised in at least one computing device connected to or integrated into a control system of the mining vehicle. Such control system may be an intelligent on-board control system controlling operation of various sub-systems of the mining vehicle, such as a hydraulic system, a motor, etc, in one example the sub-systems illustrated in Figure 3. Such control systems are often distributed and include many independent modules connected by a bus system of CAN nodes, for example.

Figure 5 illustrates a simplified example apparatus capable of supporting at least some embodiments of the present invention. Illustrated is a device 500, which may be configured to carry out at least some of the embodiments relating to controlling calibration related features of a mining vehicle as illustrated above. In some embodiments, the device 500 comprises or implements the control unit 30 or 310, or other module(s), functions and/or unit(s) for performing at least some of the above-illustrated embodiments.

Comprised in the device 500 is a processor 510, which may comprise, for example, a single- or multi-core processor. The processor 510 may comprise more than one processor. The processor may comprise at least one application-specific integrated circuit, ASIC. The processor may comprise at least one field-programmable gate array, FPGA. The processor may be configured, at least in part by computer instructions, to perform actions.

The device 500 may comprise memory 520. The memory may comprise random-access memory and/or permanent memory. The memory may be at least in part accessible to the processor 510. The memory may be at least in part comprised in the processor 510. The memory may be at least in part external to the device 500 but accessible to the device. The memory 520 may be means for storing information, such as parameters 522 affecting operations of the device. The parameter information in particular may comprise parameter information affecting the calibration control related features, such as threshold values.

The memory 520 may be a non-transitory computer readable medium comprising computer program code 524 including computer instructions that the processor 510 is configured to execute. When computer instructions configured to cause the processor to perform certain actions are stored in the memory, and the device in overall is configured to run under the direction of the processor using computer instructions from the memory, the processor and/or its at least one processing core may be considered to be configured to perform said certain actions. The processor may, together with the memory and computer program code, form means for performing at least some of the presently disclosed method steps in the device.

The device 500 may comprise a communications unit 530 comprising a transmitter and/or a receiver. The transmitter and the receiver may be configured to transmit and receive, respectively, for example data and control commands within or outside the mining vehicle. The transmitter and/or receiver may be configured to operate in accordance with wideband code division multiple access, WCDMA, long term evolution, LTE, 3GPP new radio access technology (N-RAT), wireless local area network, WLAN, and/or Ethernet standards, for example.

The device 500 may comprise or be connected to a UI. The UI may comprise at least one of a display 540, a speaker, an input device 550 such as a keyboard, a joystick, a touchscreen, and/or a microphone. The UI may be configured to display views on the basis of above illustrated embodiments. A user may operate the device and control at least some of above illustrated features. In some embodiments, the user may control the mining vehicle 10 via the UI, for example to manually drive the vehicle, operate a boom, initiate automatic loading, change mode, change parameter set, change display views, modify parameters 522, etc.

The device 500 may further comprise and/or be connected to further units, devices and systems, such as one or more sensor devices 560 configured to detect environment of the device 500 or properties of the mining vehicle.

The processor 510, the memory 520, the communications unit 530 and the UI may be interconnected by electrical leads internal to the device 500 in a multitude of different ways. For example, each of the aforementioned devices may be separately connected to a master bus internal to the device, to allow for the devices to exchange information. However, as the skilled person will appreciate, this is only one example and depending on the embodiment various ways of interconnecting at least two of the aforementioned devices may be selected.

The apparatus, such as the device 500, the mining vehicle 10, or the control unit 30 or 310, may be configured to: receive scanning data based on environment scanning performed by the scanner, wherein the scanning data is indicative of at least one position of a work implement portion of the work implement in relation to a body portion of the body, receive calibration triggering data comprising a calibration triggering threshold indicative of at least one of a threshold difference between the body portion and the work implement portion controlled to a target position or a threshold difference from a target movement range of the work implement portion in relation to the body portion, process the scanning data and the calibration triggering data to determine at least one of:
- if a deviation between the target position and a current position of the work implement portion based on the scanning data meets the calibration triggering threshold, or
- if a deviation between the target movement range and a current range of movement of the work implement portion based on the scanning data meets the calibration triggering threshold, and
detect a need for calibrating the work implement in respect to the body portion in response to the at least one deviation meeting the calibration triggering threshold.

The apparatus may be further configured to, upon detecting the need for the calibrating, start a calibration procedure to calibrate the work implement in respect to the body portion and/or cause a signal to a user interface to notify an operator of the mining vehicle of the need for the calibration.

The apparatus may be further configured to process the scanning data and the calibration triggering data to determine the deviation in response to a control action to move the work implement portion to the target position or perform the target movement range.

The apparatus may be further configured to determine if the work implement is able to reach the target position or perform the target movement range despite the obstacle.

The apparatus may be further configured to, in response to detecting that the work implement is unable to reach the target position or perform the target movement range due to the obstacle, control a change of the target position or the target movement range, control the mining vehicle to move the work implement to the changed target position or perform the target movement range, and detect a need for calibration based on processing scanning data after moving the work implement to the changed target position or performing the changed target movement range.

The apparatus may be further configured to determine, on the basis of processing the scanning data, positional difference between the work implement portion and the body portion, and detect the need for calibrating the work implement on the basis of the determined positional difference and the calibration triggering threshold.

The scanning data may comprise scanned point cloud data. The determining the at least one deviation may comprise:
- receiving reference point cloud data of the work implement portion and the body portion,
- processing the scanned point cloud data and the scanned reference point cloud data to perform a point cloud matching operation to detect the work implement portion and the body portion in the scanned point cloud data, and
- processing the scanned point cloud data to determine a distance between the detected work implement portion and the body portion in the scanned point cloud data.

The scanning data and the calibration triggering data may comprise image data. The processing the scanning data and the calibration triggering data may comprise processing the image data to:
- detect the work implement portion in an image of the scanning data and in a reference image of the calibration triggering data, and
- determine the deviation based on detected difference of the work implement portion within the image of the scanning data and within the reference image.

The calibration triggering data may comprise position sensor data from a position sensor of the work implement, the position sensor data being indicative of a position of the work implement in relation to the body portion.

The work implement may comprise a bucket or platform of a load and/or haul vehicle. The mining vehicle may be configured for autonomous driving. The apparatus may be configured to detect the need for calibration during the autonomous driving of the mobile mining vehicle.

While the forgoing examples are illustrative of the principles of the present invention in one or more particular applications, it will be apparent to those of ordinary skill in the art that numerous modifications in form, usage and details of implementation can be made, the invention being defined in the appended claims.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

## Claims

1. An apparatus for a mining vehicle (10) comprising a body, an actuator, a work implement, and a scanner (36), wherein the actuator is connected to the work implement and the body and adapted to change a position of the work implement in respect to the body, and the scanning data is indicative of a work implement portion of the work implement and a body portion of the body, the apparatus comprising at least one processor and at least one memory including computer program code, the at least one memory and the computer program code configured to, with the at least one processor, cause the apparatus at least to:
- receive scanning data based on environment scanning performed by the scanner, wherein the scanning data is indicative of at least one position of a work implement portion of the work implement in relation to a body portion of the body,
- receive calibration triggering data comprising a calibration triggering threshold indicative of at least one of a threshold difference between the body portion and the work implement portion controlled to a target position or a threshold difference from a target movement range of the work implement portion in relation to the body portion,
- process the scanning data and the calibration triggering data to determine at least one of:
- if a deviation between the target position and a current position of the work implement portion based on the scanning data meets the calibration triggering threshold, or
- if a deviation between the target movement range and a current range of movement of the work implement portion based on the scanning data meets the calibration triggering threshold, and
- detect a need for calibrating the work implement in respect to the body portion in response to the at least one deviation meeting the calibration triggering threshold.

2. The apparatus of any preceding claim, wherein the at least one memory and the computer program code are configured to, with the at least one processor, cause the apparatus to, upon detecting the need for the calibrating, start a calibration procedure to calibrate the work implement in respect to the body portion and/or cause a signal to a user interface to notify an operator of the mining vehicle of the need for the calibration.

3. The apparatus of any preceding claim, wherein the at least one memory and the computer program code are configured to, with the at least one processor, cause the apparatus to process the scanning data and the calibration triggering data to determine the deviation in response to a control action to move the work implement portion to the target position or perform the target movement range.

4. The apparatus of any preceding claim, wherein the scanning data is indicative of an obstacle and the at least one memory and the computer program code are configured to, with the at least one processor, cause the apparatus to determine if the work implement is able to reach the target position or perform the target movement range despite the obstacle.

5. The apparatus of claim 4, wherein the at least one memory and the computer program code are configured to, with the at least one processor, cause the apparatus to, in response to detecting that the work implement is unable to reach the target position or perform the target movement range due to the obstacle, control a change of the target position or the target movement range, control the mining vehicle to move the work implement to the changed target position or perform the target movement range, and detect a need for calibration based on processing scanning data after moving the work implement to the changed target position or performing the changed target movement range.

6. The apparatus of any preceding claim, wherein the at least one memory and the computer program code are configured to, with the at least one processor, cause the apparatus to
- determine, on the basis of processing the scanning data, positional difference between the work implement portion and the body portion, and
- detect the need for calibrating the work implement on the basis of the determined positional difference and the calibration triggering threshold.

7. The apparatus of any preceding claim, wherein the scanning data comprises scanned point cloud data and determining the at least one deviation comprises:
- receiving reference point cloud data of the work implement portion and the body portion,
- processing the scanned point cloud data and the scanned reference point cloud data to perform a point cloud matching operation to detect the work implement portion and the body portion in the scanned point cloud data, and
- processing the scanned point cloud data to determine a distance between the detected work implement portion and the body portion in the scanned point cloud data.

8. The apparatus of any preceding claims 1 to 5, wherein the scanning data and the calibration triggering data comprise image data, and the processing the scanning data and the calibration triggering data comprises processing the image data to:
- detect the work implement portion in an image of the scanning data and in a reference image of the calibration triggering data, and
- determine the deviation based on detected difference of the work implement portion within the image of the scanning data and within the reference image.

9. The apparatus of any preceding claim, wherein the calibration triggering data comprises position sensor data from a position sensor of the work implement, the position sensor data being indicative of a position of the work implement in relation to the body portion.

10. The apparatus of any preceding claim, wherein the work implement comprises a bucket or platform of a load and/or haul vehicle, and the mining vehicle is configured for autonomous driving and the apparatus is configured to detect the need for calibration during the autonomous driving of the mobile mining vehicle.

11. A method for a mining vehicle (10) comprising a body, an actuator, a work implement, and a scanner (26), wherein the actuator is connected to the work implement and the body and adapted to change a position of the work implement in respect to the body, the method comprising:
- receiving scanning data based on environment scanning performed by the scanner, wherein the scanning data is indicative of at least one position of a work implement portion of the work implement in relation to a body portion of the body,
- receiving calibration triggering data comprising a calibration triggering threshold indicative at least one of a threshold difference between the body portion and the work implement portion controlled to a target position or a threshold difference from a target movement range of the work implement portion in relation to the body portion,
- processing the scanning data and the calibration triggering data to determine at least one of:
- if a deviation between the target position and a current position of the work implement portion based on the scanning data meets the calibration triggering threshold, or
- if a deviation between the target movement range and a current range of movement of the work implement portion based on the scanning data meets the calibration triggering threshold, and
- detecting a need for calibrating the work implement in response to the at least one deviation meeting the calibration triggering threshold.

12. The method of claim 11, further comprising, upon detecting the need for the calibrating, starting a calibration procedure to calibrate the work implement in respect to the body portion and/or cause a signal to a user interface to notify an operator of the mining vehicle of the need for the calibration.

13. The method of claim 11 or 12, further comprising:
- determining if the work implement is able to reach the target position or perform the target movement range despite the obstacle,
- in response to detecting that the work implement is unable to reach the target position or perform the target movement range due to the obstacle, controlling a change of the target position or the target movement range,
- controlling the mining vehicle to move the work implement to the changed target position or perform the target movement range, and
- detecting a need for calibration based on processing scanning data after moving the work implement to the changed target position or performing the changed target movement range.
- processing the scanning data and the calibration triggering data to determine the deviation in response to a control action to move the work implement portion to the target position or perform the target movement range.

14. The method of any preceding claim, wherein the scanning data comprises scanned point cloud data and determining the at least one deviation comprises:
- receiving reference point cloud data of the work implement portion and the body portion,
- processing the scanned point cloud data and the scanned reference point cloud data to perform point cloud matching operation to detect the work implement portion and the body portion in the scanned point cloud data, and
- processing the scanned point cloud data to determine a distance between the detected work implement portion and the body portion in the scanned point cloud data.

15. A computer program comprising code for, when executed in a data processing apparatus, to cause the apparatus for performing the method of any one of claims **11** to 14.

## Patentansprüche

1. Einrichtung für ein Bergbaufahrzeug (10), die eine Karosserie, einen Stellantrieb, ein Arbeitsgerät und einen Scanner (36) umfasst, wobei der Stellantrieb mit dem Arbeitsgerät und der Karosserie verbunden ist und dazu angepasst ist, eine Position des Arbeitsgeräts in Bezug auf die Karosserie zu ändern, und die Scandaten einen Arbeitsgerätabschnitt des Arbeitsgeräts und einen Karosserieabschnitt der Karosserie anzeigen, wobei die Einrichtung mindestens einen Prozessor und mindestens einen Speicher einschließlich einem Computerprogrammcode umfasst, wobei der mindestens eine Speicher und der Computerprogrammcode so konfiguriert sind, dass sie zusammen mit dem mindestens einen Prozessor die Einrichtung mindestens veranlassen zum:
- Empfangen von Scandaten basierend auf einem vom Scanner durchgeführten Umgebungsscan, wobei die Scandaten mindestens eine Position eines Arbeitsgerätabschnitts des Arbeitsgeräts in Bezug auf einen Karosserieabschnitt der Karosserie anzeigen,
- Empfangen von Kalibrierungsauslösedaten, die einen Kalibrierungsauslöseschwellenwert umfassen, der mindestens einen Schwellenwertunterschied zwischen dem Karosserieabschnitt und dem auf eine Zielposition gesteuerten Arbeitsgerätabschnitt oder einen Schwellenwertunterschied von einem Zielbewegungsbereich des Arbeitsgerätabschnitts in Bezug auf den Karosserieabschnitt anzeigt,
- Verarbeiten der Scandaten und der Kalibrierungsauslösedaten, um mindestens eines des Folgenden zu bestimmen:
- ob eine Abweichung zwischen der Zielposition und einer aktuellen Position des Arbeitsgerätabschnitts basierend auf den Scandaten den Kalibrierungsauslöseschwellenwert erfüllt, oder
- ob eine Abweichung zwischen dem Zielbewegungsbereich und einem aktuellen Bewegungsbereich des Arbeitsgerätabschnitts basierend auf den Scandaten den Kalibrierungsauslöseschwellenwert erfüllt, und
- Erkennen einer Notwendigkeit zur Kalibrierung des Arbeitsgeräts in Bezug auf den Karosserieabschnitt als Reaktion darauf, dass mindestens eine Abweichung den Kalibrierungsauslöseschwellenwert erfüllt.

2. Einrichtung nach einem vorstehenden Anspruch, wobei der mindestens eine Speicher und der Computerprogrammcode so konfiguriert sind, dass sie zusammen mit dem mindestens einen Prozessor die Einrichtung dazu veranlassen, bei Erkennen der Notwendigkeit der Kalibrierung einen Kalibrierungsvorgang zu starten, um das Arbeitsgerät in Bezug auf den Karosserieabschnitt zu kalibrieren und/oder ein Signal an eine Benutzerschnittstelle zu veranlassen, um einen Bediener des Bergbaufahrzeugs über die Notwendigkeit der Kalibrierung zu benachrichtigen.

3. Einrichtung nach einem vorstehenden Anspruch, wobei der mindestens eine Speicher und der Computerprogrammcode so konfiguriert sind, dass sie zusammen mit dem mindestens einen Prozessor die Einrichtung veranlassen, die Scandaten und die Kalibrierungsauslösedaten zu verarbeiten, um die Abweichung als Reaktion auf eine Steueraktion zu bestimmen, um den Arbeitsgerätabschnitt in die Zielposition zu bewegen oder den Zielbewegungsbereich durchzuführen.

4. Einrichtung nach einem vorstehenden Anspruch, wobei die Scandaten ein Hindernis anzeigen und der mindestens eine Speicher und der Computerprogrammcode so konfiguriert sind, dass sie zusammen mit dem mindestens einen Prozessor die Einrichtung veranlassen, zu bestimmen, ob das Arbeitsgerät trotz des Hindernisses die Zielposition erreichen oder den Zielbewegungsbereich ausführen kann.

5. Einrichtung nach Anspruch 4, wobei der mindestens eine Speicher und der Computerprogrammcode so konfiguriert sind, dass sie zusammen mit dem mindestens einen Prozessor die Einrichtung dazu veranlassen, als Reaktion auf das Erkennen, dass das Arbeitsgerät aufgrund des Hindernisses die Zielposition nicht erreichen oder den Zielbewegungsbereich nicht durchführen kann, eine Änderung der Zielposition oder des Zielbewegungsbereichs zu steuern, das Bergbaufahrzeug so zu steuern, dass es das Arbeitsgerät an die geänderte Zielposition bewegt oder den Zielbewegungsbereich durchführt, und basierend auf der Verarbeitung von Scandaten die Notwendigkeit zur Kalibrierung zu erkennen, nachdem das Arbeitsgerät an die geänderte Zielposition bewegt oder der geänderte Zielbewegungsbereich durchgeführt wurde.

6. Einrichtung nach einem vorstehenden Anspruch, wobei der mindestens eine Speicher und der Computerprogrammcode konfiguriert sind, um mit dem mindestens einen Prozessor die Einrichtung zu veranlassen:
- auf der Grundlage der Verarbeitung der Scandaten den Positionsunterschied zwischen dem Arbeitsgerätabschnitt und dem Karosserieabschnitt zu bestimmen und
- auf der Grundlage des bestimmten Positionsunterschieds und des Kalibrierungsauslöseschwellenwerts die Notwendigkeit zur Kalibrierung des Arbeitsgeräts zu erkennen.

7. Einrichtung nach einem vorstehenden Anspruch, wobei die Scandaten gescannte Punktwolkendaten umfassen und das Bestimmen der mindestens einen Abweichung Folgendes umfasst:
- Empfangen von Referenz-Punktwolkendaten des Arbeitsgerätabschnitts und des Karosserieabschnitts,
- Verarbeiten der gescannten Punktwolkendaten und der gescannten Referenz-Punktwolkendaten, um einen Punktwolken-Abgleichvorgang durchzuführen, um den Arbeitsgerätabschnitt und den Karosserieabschnitt in den gescannten Punktwolkendaten zu erkennen, und
- Verarbeiten der gescannten Punktwolkendaten, um einen Abstand zwischen dem erkannten Arbeitsgerätabschnitt und dem Karosserieabschnitt in den gescannten Punktwolkendaten zu bestimmen.

8. Einrichtung nach einem der vorstehenden Ansprüche 1 bis 5, wobei die Scandaten und die Kalibrierungsauslösedaten Bilddaten umfassen und die Verarbeitung der Scandaten und der Kalibrierungsauslösedaten die Verarbeitung der Bilddaten umfasst zum:
- Erkennen des Arbeitsgerätabschnitts in einem Bild der Scandaten und in einem Referenzbild der Kalibrierungsauslösedaten und
- Bestimmen der Abweichung basierend auf den erkannten Unterschieden des Arbeitsgeräteabschnitts innerhalb des Bildes der Scandaten und innerhalb des Referenzbildes.

9. Einrichtung nach einem vorstehenden Anspruch, wobei die Kalibrierungsauslösedaten Positionssensordaten von einem Positionssensor des Arbeitsgeräts umfassen, wobei die Positionssensordaten eine Position des Arbeitsgeräts in Bezug auf den Karosserieabschnitt anzeigen.

10. Einrichtung nach einem vorstehenden Anspruch, wobei das Arbeitsgerät eine Schaufel oder Plattform einer Last und/oder ein Transportfahrzeug umfasst und das Bergbaufahrzeug für autonomes Fahren konfiguriert ist und die Einrichtung so konfiguriert ist, dass sie während des autonomen Fahrens des mobilen Bergbaufahrzeugs die Notwendigkeit zur Kalibrierung erkennt.

11. Verfahren für ein Bergbaufahrzeug (10), das eine Karosserie, einen Stellantrieb, ein Arbeitsgerät und einen Scanner (26) umfasst, wobei der Stellantrieb mit dem Arbeitsgerät und der Karosserie verbunden ist und dazu angepasst ist, eine Position des Arbeitsgeräts in Bezug auf die Karosserie zu ändern, wobei das Verfahren Folgendes umfasst:
- Empfangen von Scandaten basierend auf einem vom Scanner durchgeführten Umgebungsscan, wobei die Scandaten mindestens eine Position eines Arbeitsgerätabschnitts des Arbeitsgeräts in Bezug auf einen Karosserieabschnitt der Karosserie anzeigen,
- Empfangen von Kalibrierungsauslösedaten, die einen Kalibrierungsauslöseschwellenwert umfassen, der mindestens einen Schwellenwertunterschied zwischen dem Karosserieabschnitt und dem auf eine Zielposition gesteuerten Arbeitsgerätabschnitt oder einen Schwellenwertunterschied von einem Zielbewegungsbereich des Arbeitsgerätabschnitts in Bezug auf den Karosserieabschnitt anzeigt,
- Verarbeiten der Scandaten und der Kalibrierungsauslösedaten, um mindestens eines des Folgenden zu bestimmen:
- ob eine Abweichung zwischen der Zielposition und einer aktuellen Position des Arbeitsgerätabschnitts basierend auf den Scandaten den Kalibrierungsauslöseschwellenwert erfüllt, oder
- ob eine Abweichung zwischen dem Zielbewegungsbereich und einem aktuellen Bewegungsbereich des Arbeitsgerätabschnitts basierend auf den Scandaten den Kalibrierungsauslöseschwellenwert erfüllt, und
- Erkennen der Notwendigkeit zur Kalibrierung des Arbeitsgeräts als Reaktion darauf, dass mindestens eine Abweichung den Kalibrierungsauslöseschwellenwert erfüllt.

12. Verfahren nach Anspruch 11, das weiter umfasst, dass bei Erkennen der Notwendigkeit zur Kalibrierung einen Kalibrierungsvorgang gestartet wird, um das Arbeitsgerät in Bezug auf den Karosserieabschnitt zu kalibrieren und/oder ein Signal an eine Benutzerschnittstelle zu veranlassen, um einen Bediener des Bergbaufahrzeugs über die Notwendigkeit der Kalibrierung zu benachrichtigen.

13. Verfahren nach Anspruch **11** oder 12, weiter umfassend:
- Bestimmen, ob das Arbeitsgerät trotz des Hindernisses in der Lage ist, die Zielposition zu erreichen oder den Zielbewegungsbereich durchzuführen,
- als Reaktion auf das Erkennen, dass das Arbeitsgerät aufgrund des Hindernisses nicht in der Lage ist, die Zielposition zu erreichen oder den Zielbewegungsbereich durchzuführen, Steuern einer Änderung der Zielposition oder des Zielbewegungsbereichs,
- Steuern des Bergbaufahrzeugs, um das Arbeitsgerät an die geänderte Zielposition zu bewegen oder den Zielbewegungsbereich durchzuführen, und
- Erkennen eines Kalibrierungsbedarfs basierend auf der Verarbeitung von Scandaten nach dem Bewegen des Arbeitsgeräts in die geänderte Zielposition oder dem Durchführen des geänderten Zielbewegungsbereichs.
- Verarbeiten der Scandaten und der Kalibrierungsauslösedaten, um die Abweichung als Reaktion auf eine Steueraktion zu bestimmen, um den Arbeitsgerätabschnitt in die Zielposition zu bewegen oder den Zielbewegungsbereich durchzuführen.

14. Verfahren nach einem vorstehenden Anspruch, wobei die Scandaten gescannte Punktwolkendaten umfassen und das Bestimmen der mindestens einen Abweichung Folgendes umfasst:
- Empfangen von Referenz-Punktwolkendaten des Arbeitsgerätabschnitts und des Karosserieabschnitts,
- Verarbeiten der gescannten Punktwolkendaten und der gescannten Referenz-Punktwolkendaten, um einen Punktwolken-Abgleichvorgang durchzuführen, um den Arbeitsgerätabschnitt und den Karosserieabschnitt in den gescannten Punktwolkendaten zu erkennen, und
- Verarbeiten der gescannten Punktwolkendaten, um einen Abstand zwischen dem erkannten Arbeitsgerätabschnitt und dem Karosserieabschnitt in den gescannten Punktwolkendaten zu bestimmen.

15. Computerprogramm, umfassend Code, der, wenn in einer Datenverarbeitungseinrichtung ausgeführt wird, die Einrichtung dazu veranlasst, das Verfahren nach einem der Ansprüche 11 bis 14 durchzuführen.

## Revendications

1. Appareil pour véhicule minier (10) comprenant un corps, un actionneur, un ustensile de travail et un scanner (36), dans lequel l'actionneur est connecté à l'ustensile de travail et au corps et adapté pour changer une position de l'ustensile de travail par rapport au corps, et les données de numérisation indiquent une portion de l'ustensile de travail et une portion de corps, l'appareil comprenant au moins un processeur et au moins une mémoire incluant du code de programme informatique, l'au moins une mémoire et le code de programme informatique étant configurés pour, avec l'au moins un processeur, amener l'appareil au moins à :
- recevoir des données de numérisation basées sur une numérisation d'environnement réalisée par le scanner, dans lequel les données de numérisation indiquent au moins une position d'une portion d'ustensile de travail par rapport à une portion de corps du corps,
- recevoir des données de déclenchement d'étalonnage comprenant un seuil de déclenchement d'étalonnage indiquant au moins une différence de seuil entre la portion de corps et la portion d'ustensile de travail commandée à une position cible ou une différence de seuil par rapport à une plage de mouvement cible de la portion d'ustensile de travail par rapport à la portion de corps,
- traiter les données de numérisation et les données de déclenchement d'étalonnage pour déterminer au moins un de :
- si un écart entre la position cible et une position actuelle de la portion d'ustensile de travail basée sur les données de numérisation atteint le seuil de déclenchement d'étalonnage, ou
- si un écart entre la plage de mouvement cible et une plage de mouvement actuelle de la portion d'ustensile de travail basée sur les données de numérisation atteint le seuil de déclenchement d'étalonnage, et
- détecter un besoin d'étalonnage de l'ustensile de travail par rapport à la portion de corps en réponse à l'au moins un écart atteignant le seuil de déclenchement d'étalonnage.

2. Appareil selon une quelconque revendication précédente, dans lequel l'au moins une mémoire et le code de programme informatique sont configurés pour, avec l'au moins un processeur, amener l'appareil, lors de la détection du besoin de l'étalonnage, à démarrer une procédure d'étalonnage pour étalonner l'ustensile de travail par rapport à la portion de corps et/ou amener un signal à une interface utilisateur à notifier un opérateur du véhicule minier du besoin de l'étalonnage.

3. Appareil selon une quelconque revendication précédente, dans lequel l'au moins une mémoire et le code de programme informatique sont configurés pour, avec l'au moins un processeur, amener l'appareil à traiter les données de numérisation et les données de déclenchement d'étalonnage pour déterminer l'écart en réponse à une action de commande pour déplacer la portion d'ustensile de travail vers la position cible ou réaliser la plage de mouvement cible.

4. Appareil selon une quelconque revendication précédente, dans lequel les données de numérisation indiquent un obstacle et l'au moins une mémoire et le code de programme informatique sont configurés pour, avec l'au moins un processeur, amener l'appareil à déterminer si l'ustensile de travail est capable d'atteindre la position cible ou de réaliser la plage de mouvement cible malgré l'obstacle.

5. Appareil selon la revendication 4, dans lequel l'au moins une mémoire et le code de programme informatique sont configurés pour, avec l'au moins un processeur, amener l'appareil, en réponse à la détection que l'ustensile de travail est incapable d'atteindre la position cible ou de réaliser la plage de mouvement cible en raison de l'obstacle, à commander un changement de la position cible ou de la plage de mouvement cible, à commander le véhicule minier pour déplacer l'ustensile de travail vers la position cible changée ou réaliser la plage de mouvement cible, et à détecter un besoin d'étalonnage sur la base du traitement de données de numérisation après le déplacement de l'ustensile de travail vers la position cible changée ou réaliser la plage de mouvement cible changée.

6. Appareil selon une quelconque revendication précédente, dans lequel l'au moins une mémoire et le code de programme informatique sont configurés pour, avec l'au moins un processeur, amener l'appareil à
- déterminer, sur la base du traitement des données de numérisation, une différence de position entre la portion d'ustensile de travail et la portion de corps, et
- détecter le besoin d'étalonnage de l'ustensile de travail sur la base de la différence de position déterminée et du seuil de déclenchement d'étalonnage.

7. Appareil selon une quelconque revendication précédente, dans lequel les données de numérisation comprennent des données de nuage de points numérisées et la détermination d'au moins un écart comprend :
- la réception de données de nuage de points de référence de la portion d'ustensile de travail et de la portion de corps,
- le traitement des données de nuage de points numérisées et des données de nuage de points de référence numérisées pour réaliser une opération de mise en correspondance de nuage de points pour détecter la portion d'ustensile de travail et la portion de corps dans les données de nuage de points numérisées, et
- le traitement des données de nuage de points numérisées pour déterminer une distance entre la portion d'ustensile de travail détectée et la portion de corps dans les données de nuage de points numérisées.

8. Appareil selon une quelconque revendication précédente 1 à 5, dans lequel les données de numérisation et les données de déclenchement d'étalonnage comprennent des données d'image, et le traitement des données de numérisation et des données de déclenchement d'étalonnage comprend le traitement des données d'image pour :
- détecter la portion d'ustensile de travail dans une image des données de numérisation et dans une image de référence des données de déclenchement d'étalonnage, et
- déterminer l'écart sur la base de la différence détectée de la portion d'ustensile de travail au sein de l'image des données de numérisation et au sein de l'image de référence.

9. Appareil selon une quelconque revendication précédente, dans lequel les données de déclenchement d'étalonnage comprennent des données de capteur de position à partir d'un capteur de position de l'ustensile de travail, les données de capteur de position étant indicatives d'une position de l'ustensile de travail par rapport à la portion de corps.

10. Appareil selon une quelconque revendication précédente, dans lequel l'ustensile de travail comprend un godet ou une plateforme d'un véhicule de charge et/ou transport, et le véhicule minier est configuré pour une conduite autonome et l'appareil est configuré pour détecter le besoin d'étalonnage pendant la conduite autonome du véhicule minier mobile.

11. Procédé pour un véhicule minier (10) comprenant un corps, un actionneur, un ustensile de travail et un scanner (26), dans lequel l'actionneur est connecté à l'ustensile de travail et au corps et est adapté pour changer la position de l'ustensile de travail par rapport au corps, le procédé comprenant :
- la réception de données de numérisation basées sur une numérisation d'environnement réalisée par le scanner, dans lequel les données de numérisation indiquent au moins une position d'une portion d'ustensile de travail par rapport à une portion de corps du corps,
- la réception de données de déclenchement d'étalonnage comprenant un seuil de déclenchement d'étalonnage indiquant au moins une différence de seuil entre la portion de corps et la portion d'ustensile de travail commandée à une position cible ou une différence de seuil par rapport à une plage de mouvement cible de la portion d'ustensile de travail par rapport à la portion de corps,
- le traitement des données de numérisation et les données de déclenchement d'étalonnage pour déterminer au moins un de :
- si un écart entre la position cible et une position actuelle de la portion d'ustensile de travail basée sur les données de numérisation atteint le seuil de déclenchement d'étalonnage, ou
- si un écart entre la plage de mouvement cible et une plage de mouvement actuelle de la portion d'ustensile de travail basée sur les données de numérisation atteint le seuil de déclenchement d'étalonnage, et
- la détection d'un besoin d'étalonnage de l'ustensile de travail en réponse à l'au moins un écart atteignant le seuil de déclenchement d'étalonnage.

12. Procédé selon la revendication 11, comprenant en outre, lors de la détection du besoin de l'étalonnage, le démarrage d'une procédure d'étalonnage pour étalonner l'ustensile de travail par rapport à la portion de corps et/ou envoyer un signal à une interface utilisateur pour notifier l'opérateur du véhicule minier du besoin de l'étalonnage.

13. Procédé selon la revendication 11 ou 12, comprenant en outre :
- la détermination de si l'ustensile de travail est capable d'atteindre la position cible ou de réaliser la plage de mouvement cible malgré l'obstacle,
- en réponse à la détection que l'ustensile de travail est incapable d'atteindre la position cible ou de réaliser la plage de mouvement cible en raison de l'obstacle, la commande d'un changement de la position cible ou de la plage de mouvement cible,
- la commande du véhicule minier pour déplacer l'ustensile de travail vers la position cible changée ou réaliser la plage de mouvement cible, et
- la détection d'un besoin d'étalonnage sur la base du traitement des données de numérisation après le déplacement de l'ustensile de travail vers la position cible changée ou réaliser la plage de mouvement cible changée,
- le traitement des données de numérisation et des données de déclenchement d'étalonnage pour déterminer l'écart en réponse à une action de commande pour déplacer la portion d'ustensile de travail vers la position cible ou réaliser la plage de mouvement cible.

14. Procédé selon une quelconque revendication précédente, dans lequel les données de numérisation comprennent des données de nuage de points numérisées et la détermination d'au moins un écart comprend :
- la réception de données de nuage de points de référence de la portion d'ustensile de travail et de la portion de corps,
- le traitement des données de nuage de points numérisées et les données de nuage de points de référence numérisées pour réaliser une opération de mise en correspondance de nuage de points pour détecter la portion d'ustensile de travail et la portion de corps dans les données de nuage de points numérisées, et
- le traitement des données de nuage de points numérisées pour déterminer une distance entre la portion d'ustensile de travail détectée et la portion de corps dans les données de nuage de points numérisées.

15. Programme informatique comprenant du code pour, lorsqu'il est exécuté dans un appareil de traitement de données, amener l'appareil à réaliser le procédé selon l'une quelconque des revendications 11 à 14.
